# EUROPÄISCHE PATENTSCHRIFT

(11) **EP 4 292 416 B1**
(45) Veröffentlichungstag und Bekanntmachung des Hinweises auf die Patenterteilung: **21.10.2026**
(21) Anmeldenummer: 22179576.8
(22) Anmeldetag: 17.06.2022
(51) Int. Cl.: A01C 17/00

(54) **VERFAHREN UND SYSTEM ZUM ERMITTELN EINER MASCHINEN- UND STREUGUTSPEZIFISCHEN SOWIE FAHRGASSENUNABHÄNGIGEN MAXIMALARBEITSBREITE**
METHOD AND SYSTEM FOR DETERMINING A MAXIMUM WORKING WIDTH SPECIFIC TO A MACHINE AND DISPERSED MATERIAL AND INDEPENDENT ON A DRIVING LANE
PROCÉDÉ ET SYSTÈME DE DÉTERMINATION D'UNE LARGEUR MAXIMALE DE TRAVAIL SPÉCIFIQUE À UNE MACHINE ET À UN PRODUIT À ÉPANDRE, ET INDÉPENDANTE DES VOIES DE ROULEMENT

(43) Veröffentlichungstag der Anmeldung: 20.12.2023
(73) Patentinhaber: Amazonen-Werke H. Dreyer SE & Co. KG, 49205 Hasbergen (DE)
(72) Erfinder: Wessels, Thomas, 49080 Osnabrück (DE)

(56) Entgegenhaltungen:
- EP-A1- 2 868 183
- DE-A1- 102013 114 110

## Beschreibung

Die Erfindung betrifft ein Verfahren zum Ermitteln einer maschinen- und streugutspezifischen sowie fahrgassenunabhängigen Maximalarbeitsbreite für einen Streuvorgang und ein System zum Ermitteln einer maschinen- und streugutspezifischen sowie fahrgassenunabhängigen Maximalarbeitsbreite für einen Streuvorgang.

Hier und im Folgenden wird unter einem Fahrgassensystem oder fahrgassenabhängigen System ein System zur Bearbeitung eines Feldes verstanden, bei dem das Feld von einem landwirtschaftlichen Arbeitsgerät in, typischerweise parallelen, vorherbestimmten Spuren abgefahren wird. Diese Spuren werden auch als Fahrgassen bezeichnet. Typischerweise verlaufen diese Fahrgassen in einem vorherbestimmten Abstand zueinander. Beispielsweise können bei Reihenkulturen die Fahrgassen aufgrund des Reihenabstands der Reihenkulturen vorgegeben sein. Im Gegensatz dazu sind die Fahrspuren des landwirtschaftlichen Arbeitsgeräts in einem fahrgassenunabhängigen System nicht im Vornehinein festgelegt.

Aus dem Stand der Technik ist das Einstellen und sensorbasierte Nachstellen von Einstellparametern einer landwirtschaftlichen Streumaschine zur Erzielung einer durch ein Fahrgassensystem vorgegebenen Arbeitsbreite bekannt. In diesem Zusammenhang offenbart die Druckschrift US 2014/263713 A1 ein Verfahren zur Regelung einer Einrichtung zur Veränderung des Streuringsektors eines Scheibenstreuers. Weitere Verfahren sind durch DE 10 2013 114110 A1, EP 2 868 183 A1 und EP 3 348 128 B1 offenbart.

In einigen Anwendungsfällen soll jedoch eine fahrgassenunabhängige Maximalarbeitsbreite an der landwirtschaftlichen Streumaschine eingestellt werden, beispielsweise um die Anzahl der erforderlichen Parallelfahrten zu minimieren. Ein Verfahren zum Ermitteln einer fahrgassenunabhängigen Maximalarbeitsbreite ist bisher nicht bekannt.

Die der Erfindung zugrundeliegende Aufgabe besteht also darin, das Ermitteln einer maschinen- und streugutspezifischen sowie fahrgassenunabhängigen Maximalarbeitsbreite zu ermöglichen. Dabei fallen im Folgenden unter den Begriff "Maximalarbeitsbreite", wenn nicht anders angegeben, sowohl eine maximal technisch mögliche Arbeitsbreite, im Folgenden auch als "theoretische Maximalarbeitsbreite" bezeichnet, als auch eine maximale Arbeitsbreite, welche das System im Wesentlichen konstant unter Berücksichtigung äußerer Einflüsse erreichen kann, im Folgenden auch als "varianzstabile Maximalarbeitsbreite" bezeichnet. Entsprechend ist der Begriff "varianzstabil" in Bezug auf einen Parameter des Systems dahingehend zu verstehen, dass der Parameter im Betrieb unter Berücksichtigung äußerer Einflüsse im Wesentlichen konstant gehalten werden kann, wobei "im Wesentlichen konstant" in diesem Zusammenhang bedeutet, dass eine Schwankung des Parameters innerhalb eines vorherbestimmten Toleranzbereichs erlaubt sein kann.

Die Aufgabe wird gelöst durch ein Verfahren gemäß Anspruch 1. Das Verfahren umfasst das Abwerfen von Streugut mittels zumindest einer Streuscheibe einer landwirtschaftlichen Streumaschine, und das Erfassen des abgeworfenen Streuguts mittels eines sensorischen Streuguterfassungssystems der landwirtschaftlichen Streumaschine, wobei im Rahmen des erfindungsgemäßen Verfahrens mittels einer elektronischen Datenverarbeitungseinrichtung die maschinen- und streugutspezifische sowie fahrgassenunabhängige Maximalarbeitsbreite berechnet wird, wobei die elektronische Datenverarbeitungseinrichtung beim Berechnen der maschinen- und streugutspezifischen sowie fahrgassenunabhängigen Maximalarbeitsbreite von dem Streuguterfassungssystem ermittelte Messwerte und/oder eine oder mehrere daraus abgeleitete Ausbringparameter berücksichtigt.

Aufgrund der vergleichsweise präzisen sensorbasierten Erfassung des abgeworfenen Streuguts und einer darauf basierenden Regelung des Systems weicht die tatsächliche Querverteilung des Streuguts während des Ausbringvorgangs lediglich geringfügig von einer beabsichtigten Soll-Querverteilung ab, welche im Vorfeld des Ausbringvorgangs oder während des Ausbringvorgangs ermittelt wurde. Das Ausbringergebnis bei fahrgassenunabhängigen Streuvorgängen kann somit erheblich verbessert werden.

Die von dem Streuguterfassungssystem ermittelten Messwerte und/oder der eine oder die mehreren daraus abgeleiteten Ausbringparameter betreffen die Wurfrichtung des abgeworfenen Streuguts und können ferner die Verteilung des abgeworfenen Streuguts betreffen. Das Streuguterfassungssystem kann dazu konfiguriert sein, die Streugutverteilung in einem Nahbereich der zumindest einen Streuscheibe zu ermitteln. Alternativ oder zusätzlich kann das Streuguterfassungssystem dazu konfiguriert sein, die Fluggeschwindigkeit und/oder die Wurfweite des abgeworfenen Streuguts in einem Fernbereich der Streuscheibe zu ermitteln. Hierbei ist unter dem Nahbereich der Streuscheibe derjenige Bereich zu verstehen, in dem sich das Streugut unmittelbar nach Verlassen der Streuscheibe befindet. Befindet sich das Streugut im Nahbereich der Streuscheibe, so hat sich typischerweise noch keine Wurfparabel ausgebildet. Die Flugbahn des Streuguts ist im Nahbereich noch annähernd gerade und nicht von äußeren Einflüssen, wie etwa Windeinflüssen, Luftreibungseinflüssen und Schwerkrafteinflüssen, geprägt. Im Gegensatz dazu sind solche äußere Einflüsse auf die Flugbahn des Streuguts im Fernbereich der Streuscheibe nicht mehr vernachlässigbar. Es ist möglich, dass der Fernbereich einen Bereich umfasst, in dem sich die Einzelstreufächer mehrerer Streuscheiben überlappen.

Die von dem Streuguterfassungssystem ermittelten Messwerte und/oder der eine oder die mehreren daraus abgeleiteten Ausbringparameter betreffen die Fluggeschwindigkeit des abgeworfenen Streuguts und können ferner die Wurfweite des abgeworfenen Streuguts betreffen. Das Streuguterfassungssystem kann einen oder mehrere Erfassungssensoren zur Erfassung der Fluggeschwindigkeit des abgeworfenen Streuguts aufweisen. Diese Erfassungssensoren können beispielsweise an einem Streugutvorratsbehälter der Streumaschine angeordnet sein. Die Erfassungssensoren zur Fluggeschwindigkeitserfassung können nach dem Dopplerprinzip arbeiten. Insbesondere kann es sich bei den Erfassungssensoren um Radarsensoren handeln. Es ist möglich, dass die Erfassungssensoren so ausgerichtet sind, dass ihre Messrichtung entlang einer Hauptauswurfsrichtung des Streuguts verläuft. Insbesondere kann die Messrichtung der Erfassungssensoren der Fluggeschwindigkeit so ausgerichtet sein, dass sich das Streugut auf einem Teil seiner Flugbahn, insbesondere beim Übergang aus dem Nahbereich in den Fernbereich, annähernd parallel zur Messrichtung der Erfassungssensoren bewegt. Das Streugut kann beispielsweise Dünger sein.

Erfindungsgemäß ist die elektronische Datenverarbeitungseinrichtung dazu konfiguriert, auf Grundlage der ermittelten Fluggeschwindigkeit des abgeworfenen Streuguts und/oder der ermittelten Wurfrichtung und/oder der ermittelten Wurfweite des abgeworfenen Streuguts eine theoretische Maximalwurfweite und/oder eine theoretische Maximalarbeitsbreite zu berechnen. Die elektronische Datenverarbeitungseinrichtung kann dazu konfiguriert sein, bei der Berechnung der theoretischen Maximalwurfweite und/oder der theoretischen Maximalarbeitsbreite einen oder mehrere Arbeitsparameter der zumindest einen Streuscheibe zu berücksichtigen. Der eine oder die mehreren Arbeitsparameter kann beispielsweise einen Scheibenradius der zumindest einen Streuscheibe und/oder eine Drehzahl der zumindest einen Streuscheibe umfassen.

Insbesondere kann ein Zusammenhang zwischen einer Wurfweite des Streuguts und einer bestimmten Drehzahl, insbesondere der maximalen Drehzahl, der Scheibe bekannt sein und die Datenverarbeitungseinrichtung kann dazu konfiguriert sein, diesen Zusammenhang bei der Berechnung der theoretischen Maximalwurfweite und/oder der theoretischen Maximalarbeitsbreite zu berücksichtigen. Der Zusammenhang kann durch vorherige Messungen ermittelt worden sein. Alternativ oder zusätzlich kann der Zusammenhang durch eine mathematische Formel beschrieben sein. Daten, die mit dem Zusammenhang assoziiert sind, können in einer Speichereinheit der Datenverarbeitungseinrichtung hinterlegt sein.

Eine Arbeitsbreite, eine Wurfweite und eine Wurfrichtung bzw. ein Abwurfwinkel des Streuguts können bei gleichbleibenden Rahmenbedingungen ein Wertetriple bilden, sodass es möglich ist, einen der Werte mit der elektronischen Datenverarbeitungseinrichtung zu berechnen, falls die anderen Werte bekannt sind. So kann beispielsweise die Wurfweite durch eine eingestellte Drehzahl, und eine Wurfrichtung durch eine gewünschte Sollbildform, wie weiter unten erläutert, gegeben sein. Damit kann es möglich sein, die Arbeitsbreite für eine bestimmte Drehzahl und eine bestimmte Wurfrichtung zu bestimmen. Der Zusammenhang zwischen der Arbeitsbreite, der Wurfweite und der Wurfrichtung bzw. dem Abwurfwinkel des Streuguts kann durch vorherige Messungen ermittelt worden sein. Alternativ oder zusätzlich kann der Zusammenhang durch eine mathematische Formel beschrieben sein. Daten, die mit dem Zusammenhang assoziiert sind, können in einer Speichereinheit der Datenverarbeitungseinrichtung hinterlegt sein.

Die elektronische Datenverarbeitungseinrichtung ist dazu konfiguriert, beim Berechnen der maschinen- und streugutspezifischen sowie fahrgassenunabhängigen Maximalarbeitsbreite die theoretische Maximalwurfweite und/oder die theoretische Maximalarbeitsbreite zur Berücksichtigung von zu erwartenden Fremdeinflüssen auf die Streugutverteilung auf eine varianzstabile Maximalwurfweite und/oder eine varianzstabile Maximalarbeitsbreite zu reduzieren. Durch die Reduzierung auf eine varianzstabile Maximalwurfweite und/oder eine varianzstabile Maximalarbeitsbreite kann erreicht werden, dass dem System ausreichende Regelkapazität zur Verfügung steht, um die varianzstabile Maximalwurfweite und/oder varianzstabile Maximalarbeitsbreite während des Betriebs konstant aufrecht zu erhalten. So kann mit der zur Verfügung stehenden Regelkapazität beispielsweise auf unvorhergesehene Umwelteinflüsse, z.B. sich verändernde Windverhältnisse, reagiert werden um die varianzstabile Maximalwurfweite und/oder varianzstabile Maximalarbeitsbreite konstant beizubehalten.

Die elektronische Datenverarbeitungseinrichtung ist dazu konfiguriert, Einstellparameter für die Streumaschine, über welche die varianzstabile Maximalwurfweite und/oder varianzstabile Maximalarbeitsbreite während der Streugutausbringung umgesetzt wird, zu berechnen. Die Einstellung der berechneten Einstellparameter kann selbsttätig durch die Streumaschine erfolgen. Alternativ können die Einstellparameter dem Maschinenbediener angezeigt werden, sodass dieser die Einstellungen manuell vornehmen kann. Alternativ kann die elektronische Datenverarbeitungseinrichtung dazu konfiguriert sein, auch für die theoretische Maximalwurfweite und/oder die theoretische Maximalarbeitsbreite Einstellparameter zu berechnen, beispielsweise wenn keine besonderen Anforderungen an die Varianzstabilität gestellt werden.

Die elektronische Datenverarbeitungseinrichtung kann dazu konfiguriert sein, beim Berechnen der maschinen- und streugutspezifischen sowie fahrgassenunabhängigen Maximalarbeitsbreite die Einhaltung von einer oder mehreren die Querverteilung des Streuguts betreffenden Mindestanforderungen zu berücksichtigen.

Eine Mindestanforderung kann die Streubildform betreffen. Beispielsweise kann die maschinen- und streugutspezifische sowie fahrgassenunabhängige Maximalarbeitsbreite derart berechnet werden, dass das Streubild nicht über einen Toleranzmaß hinaus von einer Streubildsollform abweicht. Die Streubildsollform kann insbesondere eine Form sein, die bei aufeinander folgenden Überfahrten, insbesondere Parallelfahrten, der Streumaschine eine homogene und/oder bedarfsgerechte Gesamtverteilung des ausgebrachten Streuguts ermöglicht. Dabei ist es möglich, dass es durch die Wahl der Streubildsollform an vorbestimmten Stellen zu einer gewollten Überlappung von Streugut kommt. Alternativ oder zusätzlich kann es durch die Wahl der Streubildsollform dazu kommen, dass an bestimmten Stellen gewollt kein Streugut ausgebracht wird. Die Streubildsollform kann beispielsweise eine Dreiecksform sein. Die Streubildsollform kann auch eine Trapezform sein. Auch andere geometrische Formen sind möglich.

Eine Streubildform kann durch eine Wurfrichtung bzw. einen Abwurfwinkel des Streuguts bestimmt sein. So kann beispielsweise ein Abwurfwinkel von etwa 20° bis 25° in einer Dreiecksform resultieren. Mit anderen Worten ist es möglich, dass eine gewünschte Streubildform bzw. Streubildsollform durch die Wahl der Wurfrichtung bzw. des Abwurfwinkels eingestellt werden kann.

Eine Mindestanforderung kann einen Variationskoeffizienten betreffen. Mit einem Variationskoeffizienten ist hierbei ein Wert gemeint, der die Abweichung eines erzielten Streubilds von einem Sollstreubild angibt. Beispielsweise kann die maschinen- und streugutspezifische sowie fahrgassenunabhängige Maximalarbeitsbreite derart berechnet werden, dass die durch den Variationskoeffizienten beschriebene Abweichung einen Grenzwert nicht überschreitet. Beispielsweise kann die Maximalarbeitsbreite so berechnet werden, dass der Variationskoeffizient einer Abweichung des erzielten Streubilds vom Sollstreubild von weniger als 15%, vorzugsweise weniger als 10%, entspricht. Weiterhin kann die maschinen- und streugutspezifische sowie fahrgassenunabhängige Maximalarbeitsbreite derart berechnet werden, dass die zu erwartenden Querverteilungsschwankungen des Streuguts während des Streuvorgangs in einem vorgegebenen Toleranzbereich liegen. Wenn festgestellt wird, dass die Streubildform während des Ausbringens über ein Toleranzmaß hinaus von einer Streubildsollform abweicht, die durch den Variationskoeffizienten beschriebene Abweichung bei der Ausbringung einen Grenzwert überschreitet und/oder die Querverteilungsschwankung des Streuguts während des Streuvorgangs außerhalb des vorgegebenen Toleranzbereichs liegen, kann eine Neubewertung und eine Neuberechnung der maschinen- und streugutspezifischen sowie fahrgassenunabhängigen Maximalarbeitsbreite mittels der elektronischen Datenverarbeitungseinrichtung erfolgen.

Auch wenn die Mindestanforderungen eingehalten werden, kann eine regelmäßige oder unregelmäßige Neuberechnung der maschinen- und streugutspezifischen sowie fahrgassenunabhängigen Maximalarbeitsbreite durch die elektronische Datenverarbeitungseinrichtung vorgenommen werden. Somit kann während des Ausbringvorgangs die Qualität der Ausbringung verbessert werden. Die ermittelte Arbeitsbreite kann dem Bediener oder einem Lenksystem übermittelt werden, damit manuell oder automatisiert entsprechend gefahren werden kann. Äußere Einflüsse, beispielsweise veränderter Wind oder veränderte Geländeneigung, Drehzahlschwankungen oder Schwankungen bei der Streugutaufgabe, können zu einer veränderten Querverteilung des Streuguts führen und es ist daher möglich, diese Einflüsse beim Berechnen der maschinen- und streugutspezifischen sowie fahrgassenunabhängigen Maximalarbeitsbreite zu berücksichtigen.

Es ist möglich, dass die berechnete fahrgassenunabhängige Maximalarbeitsbreite nicht mit einem Spurabstand zwischen zwei benachbarten Fahrspuren übereinstimmt. Der Grund hierfür ist, dass, insbesondere abhängig von einer gewählten Streubildsollform, eine Überlappung des bei aufeinanderfolgenden Überfahrten ausgebrachten Streuguts gewünscht ist, um eine homogene Querverteilung des Streuguts zu erreichen. In diesem Fall kann der Spurabstand kleiner sein als die berechnete fahrgassenunabhängige Maximalarbeitsbreite, beispielsweise 5% bis 25% kleiner.

Die elektronische Datenverarbeitungseinrichtung kann dementsprechend weiterhin dazu konfiguriert sein, einen Spurabstand zwischen einer momentan befahrenen Spur und der folgenden Spur zu bestimmen. Der bestimmte Spurabstand kann dem Bediener oder einem Lenksystem übermittelt werden, damit manuell oder automatisiert entsprechend gefahren werden kann. Die elektronische Datenverarbeitungseinrichtung kann dazu konfiguriert sein, bei der Bestimmung des Spurabstands die Daten des Streuguterfassungssystems und/oder die Streubildsollform und/oder die berechnete fahrgassenunabhängige Maximalarbeitsbreite zu berücksichtigen. Insbesondere kann bei einer wie oben beschriebenen regelmäßigen oder unregelmäßigen Neuberechnung der fahrgassenunabhängigen Maximalarbeitsbreite eine entsprechende Bestimmung des Spurabstands vorgenommen werden.

Das landwirtschaftliche Gerät kann weiterhin mindestens einen Sensor zur Erfassung von Umwelteinflüssen umfassen, insbesondere mindestens einen Sensor zur Erfassung einer Windgeschwindigkeit und/oder einer Windrichtung. Die elektronische Datenverarbeitungseinrichtung kann dazu konfiguriert sein, die Sensordaten des mindestens einen Sensors bei der Berechnung und/oder Anpassung der maschinen- und streugutspezifischen sowie fahrgassenunabhängigen Maximalarbeitsbreite zu berücksichtigen.

Insbesondere kann die elektronische Datenverarbeitungseinrichtung dazu konfiguriert sein, die Daten des mindestens einen Sensors zur Erfassung von Umwelteinflüssen und die Daten des Streuguterfassungssystems gemeinsam bei der Berechnung und/oder Anpassung der maschinen- und streugutspezifischen sowie fahrgassenunabhängigen Maximalarbeitsbreite zu berücksichtigen. So kann beispielsweise aufgrund der Daten des Streuguterfassungssystems eine Abweichung der Streugutverteilung von einer Streubildsollform erkannt werden, und die Datenverarbeitungseinrichtung kann anhand der Sensordaten des mindestens einen Sensors zur Erfassung von Umwelteinflüssen einen oder mehrere Arbeitsparameter der Streuscheibe anpassen, um diese Umwelteinflüsse auszugleichen.

Die elektronische Datenverarbeitungseinrichtung kann weiterhin dazu konfiguriert sein, vor einem Spurwechsel zu überprüfen, ob bei der folgenden Fahrt eine Anpassung der fahrgassenunabhängigen Maximalarbeitsbreite erfolgen soll, beispielsweise basierend auf einer Streubildsollform. Die elektronische Datenverarbeitungseinrichtung kann dazu konfiguriert sein, dem Fahrer der Streumaschine eine eventuell notwendige Anpassung der fahrgassenunabhängigen Maximalarbeitsbreite anzuzeigen. Die elektronische Datenverarbeitungseinrichtung kann auch dazu konfiguriert sein, eine eventuell notwendige Anpassung der fahrgassenunabhängigen Maximalarbeitsbreite, insbesondere autonom, vorzunehmen.

Wie oben beschrieben, kann bei einer solchen Anpassung der fahrgassenunabhängigen Maximalarbeitsbreite zusätzlich ein neuer Spurabstand durch die elektronische Datenverarbeitungseinrichtung bestimmt werden. Weiterhin kann das Abwerfen von Streugut und/oder das Erfassen des abgeworfenen Streuguts mittels des Streuguterfassungssystems bei einer oder mehreren Kalibrierdrehzahlen an der zumindest einen Streuscheibe und/oder beim Durchlaufen eines Kalibrierdrehzahlfensters an der zumindest einen Streuscheibe erfolgen. Eine Kalibrierdrehzahl kann beispielsweise eine Maximaldrehzahl der zumindest einen Streuscheibe sein. Eine Kalibrierdrehzahl kann auch eine andere vorherbestimmte Drehzahl der zumindest einen Streuscheibe sein. Das Kalibrierdrehzahlfenster kann ein oberes Drehzahlband der zumindest einen Streuscheibe sein.

Die Menge und/oder das Gewicht des sich auf der zumindest einen Streuscheibe befindenden Streuguts kann sensorisch ermittelt werden. Die elektronische Datenverarbeitungseinrichtung kann beim Berechnen der maschinen- und streugutspezifischen sowie fahrgassenunabhängigen Maximalarbeitsbreite die sensorisch ermittelte Menge und/oder das sensorisch ermittelte Gewicht des sich auf der zumindest einen Streuscheibe befindenden Streuguts berücksichtigen. Die Mengenerfassung kann beispielsweise über eine Drehmomenterfassung an der Streuscheibe, insbesondere an zumindest einer Schaufel der Streuscheibe oder an der Antriebswelle der Streuscheibe erfolgen. Alternativ oder zusätzlich kann die Mengenerfassung über eine oder mehrere Wiegezellen und/oder über eine Einstellung eines Dosierschiebers, über welchen die auf die Streuscheibe aufgegebene Streugutmenge und/oder der Auftreffpunkt des auf die Streuscheibe aufgegebenen Streuguts veränderbar ist, erfolgen.

Die Datenverarbeitungseinrichtung kann weiterhin dazu konfiguriert sein, eine auszugebende Menge von Streugut aufgrund einer berechneten maschinen- und streugutspezifischen sowie fahrgassenunabhängigen Maximalarbeitsbreite zu bestimmen und/oder anzupassen.

Weiterhin können die aktuelle Konfiguration und/oder ein aktueller oder mehrere aktuelle Betriebsparameter der Streumaschine ermittelt werden. Die elektronische Datenverarbeitungseinrichtung kann beim Berechnen der maschinen- und streugutspezifischen sowie fahrgassenunabhängigen Maximalarbeitsbreite die ermittelte aktuelle Konfiguration oder den einen oder die mehreren ermittelten aktuellen Betriebsparameter der Streumaschine berücksichtigen. Die elektronische Datenverarbeitungseinrichtung kann dazu konfiguriert sein, beim Berechnen der maschinen- und streugutspezifischen sowie fahrgassenunabhängigen Maximalarbeitsbreite vorzugsweise eine Regelreserve zu berücksichtigen. So kann die maximale Arbeitsbreite auch bei einer sich verändernden Streusituation gehalten werden. Die Konfiguration kann den verwendeten Scheibentyp oder die Geometrie der verwendeten Streuscheibe betreffen. Wenn die Streuscheiben verstellbare Abwurfschaufeln aufweisen, kann die Konfiguration auch die Abwurfschaufeleinstellung, insbesondere die Abwurfschaufellänge und/oder deren Anstellwinkel, betreffen. Die Betriebsparameter können die aktuelle Scheibendrehzahl und/oder die aktuelle Einstellung einer Streugutaufgabeverstelleinrichtung betreffen. Über die Streugutaufgabeverstelleinrichtung kann der Aufgabepunkt des Streuguts auf die Streuscheibe verstellt werden. Mittels der Streugutaufgabeverstelleinrichtung kann der Aufgabepunkt des Streuguts auf die zumindest eine Streuscheibe in Radialrichtung und/oder in Umfangsrichtung verstellt werden. Die Betriebsparameter können ferner die Stellung eines Dosierschiebers betreffen, über welchen die auf die Streuscheibe aufgegebene Streugutmenge und/oder der Auftreffpunkt des auf die Streuscheibe aufgegebenen Streuguts veränderbar ist. Die Betriebsparameter können ferner die Fördergeschwindigkeit eines Transportbandes, etwa eines Bandbodens, betreffen. Ein solches Transportband kann beispielsweise bei gezogenen Streumaschinen eingesetzt werden, bei welchen das Streugut aus einem länglichen Vorratsbehälter zu den Streuscheiben gefördert wird.

Die elektronische Datenverarbeitungseinrichtung kann dazu konfiguriert sein, beim Berechnen der maschinen- und streugutspezifischen sowie fahrgassenunabhängigen Maximalarbeitsbreite ein fiktives Ausbringszenario zugrunde zu legen, bei welchem das Streubild statistischen Schwankungen unterliegt. Die elektronische Datenverarbeitungseinrichtung kann dazu konfiguriert sein, hierbei zunächst ein idealisiertes Streubild anzunehmen und dann statistisch wahrscheinliche Abweichungen von dem idealisierten Streubild zu berücksichtigen. Beispielsweise kann die elektronische Datenverarbeitungseinrichtung dazu konfiguriert sein, das Ausbringszenario anhand von Ausbringvorgaben zu simulieren. Die Ausbringvorgaben können beispielsweise die erwarteten Fahrgeschwindigkeiten und/oder die erwarteten Fahrtrichtungen bzw. den erwarteten Bewegungspfad betreffen. Das Ausbringszenario kann ferner die Streugutausbringung beeinflussende Parameter berücksichtigen, wie beispielsweise Umgebungs- oder Wettereinflüsse. Die Ausbringvorgaben können beispielsweise das auszubringende Streugut und/oder dessen Eigenschaften betreffen. Die Ausbringvorgaben können von einem Bediener definiert werden. Die Ausbringvorgaben können durch eine vorgegebene Bearbeitungsroutine definiert werden. Beispielsweise kann die vorgegebene Bearbeitungsroutine auf einer Applikationskarte für das auszubringende Streugut basieren.

Weiterhin kann die elektronische Datenverarbeitungseinrichtung dazu konfiguriert sein, beim Berechnen der maschinen- und streugutspezifischen sowie fahrgassenunabhängigen Maximalarbeitsbreite ein fiktives Ausbringszenario zugrunde zu legen, bei welchem das Streubild aufgrund von einem oder mehreren angenommenen Fremdeinflüssen, insbesondere einem angenommenen Windeinfluss, Schwankungen unterliegt. Beispielsweise kann der Einfluss einer angenommenen fiktiven Maximalwindstärke auf das Streubild beim Berechnen der maschinen- und streugutspezifischen sowie fahrgassenunabhängigen Maximalarbeitsbreite berücksichtigt werden. Die Maximalwindstärke kann beispielsweise vorgegeben und/oder vom Bediener definiert werden und/oder als zu erwartender Wert aus durchschnittlichen historischen Daten abgeleitet werden.

Die elektronische Datenverarbeitungseinrichtung kann zudem dazu konfiguriert sein, beim Berechnen der maschinen- und streugutspezifischen sowie fahrgassenunabhängigen Maximalarbeitsbreite einen, insbesondere vom Bediener, eingestellten Streubildtoleranzmodus und/oder eine, insbesondere vom Bediener, eingestellte tolerierte Streubildschwankung zu berücksichtigen. Es können mehrere Streubildtoleranzmodi einstellbar sein. Ein Streubildtoleranzmodus kann beispielsweise starke Streubildschwankungen erlauben, sodass der Fokus auf der Erzielung einer maximalen Arbeitsbreite liegen kann. Ein Streubildtoleranzmodus kann beispielsweise lediglich geringe Streubildschwankungen erlauben, sodass der Fokus auf der sicheren Einhaltung des Streubilds liegen kann. Ein Streubildtoleranzmodus kann beispielsweise Streubildschwankungen erlauben, welche einen Kompromiss zwischen der Erzielung der maximalen Arbeitsbreite und der sicheren Einhaltung des Streubilds darstellen. Die tolerierte Streubildschwankung kann, beispielsweise vom Hersteller und/oder vom Bediener, auch direkt vorgegeben werden. Insbesondere kann die elektronische Datenverarbeitungseinrichtung dazu konfiguriert sein, auch Streufehler und Abweichungen von einem erwarteten Streubild erfassen und zu dokumentieren, sodass diese Fehler und Abweichungen bei einem zukünftigen Ausbringvorgang berücksichtigt werden können.

Die Steuerungseinrichtung kann dazu konfiguriert sein, eine selbsttätige Einstellung von Einstellparametern zur Erzielung der berechneten maschinen- und streugutspezifischen sowie fahrgassenunabhängigen Maximalarbeitsbreite an der Streumaschine zu veranlassen. Die Einstellparameter können beispielsweise eine Scheibendrehzahl einer Streuscheibe, eine Schaufellänge einer Streuscheibe, eine Schaufelstellung einer Streuscheibe, einen Aufgabepunkt des Streuguts auf eine Streuscheibe, eine Neigung und/oder eine Dosiermenge des Streuguts betreffen. Bei der Neigung kann es sich um eine Neigung der Streumaschine und/oder eine Neigung des Streuwerks und/oder eine Neigung einer Streuscheibe und/oder eine Neigung einer Abwurfstreuschaufel handeln.

Die elektronische Datenverarbeitungsvorrichtung kann eine oder mehrere Speichereinrichtungen umfassen. Die elektronische Datenverarbeitungsvorrichtung kann einen oder mehrere Prozessoren umfassen. Die elektronische Datenverarbeitungsvorrichtung kann beispielsweise als Bordcomputer einer Streumaschine ausgebildet sein. Alternativ oder zusätzlich kann die elektronische Datenverarbeitungsvorrichtung als Tablet Computer ausgebildet sein.

Die der Erfindung zugrundeliegende Aufgabe wird ferner durch ein System gemäß Anspruch 11 gelöst.

Nachfolgend werden bevorzugte Ausführungsformen der Erfindung unter Bezugnahme auf die beiliegenden Zeichnungen näher erläutert und beschrieben. Dabei zeigen:
- Fig. 1: ein aus dem Stand der Technik bekanntes Verfahren zum Ermitteln eines Fahrspurabstandes in einer schematischen Darstellung;
- Fig. 2: ein erfindungsgemäßes System zum Ermitteln einer maschinen- und streugutspezifischen sowie fahrgassenunabhängigen Maximalarbeitsbreite in einer schematischen Darstellung;
- Fig. 3: die bei maximaler Scheibendrehzahl auftretenden Arbeitsbreitenschwankungen in einer schematischen Darstellung;
- Fig. 4: die bei einer varianzstabilen Scheibendrehzahl auftretenden Arbeitsbreitenschwankungen in einer schematischen Darstellung;
- Fig. 5: die bei maximaler Scheibendrehzahl auftretenden Mengenschwankungen in der Querverteilung in einer schematischen Darstellung;
- Fig. 6: die bei der varianzstabilen Scheibendrehzahl auftretenden Mengenschwankungen in der Querverteilung in einer schematischen Darstellung;
- Fig. 7: einen Zusammenhang zwischen einer Maximalarbeitsbreite und einem Spurabstand in einer schematischen Darstellung; und
- Fig. 8: eine schematische Darstellung eines Verfahrens zum Ermitteln einer maschinen- und streugutspezifischen sowie fahrgassenunabhängigen Maximalarbeitsbreite.

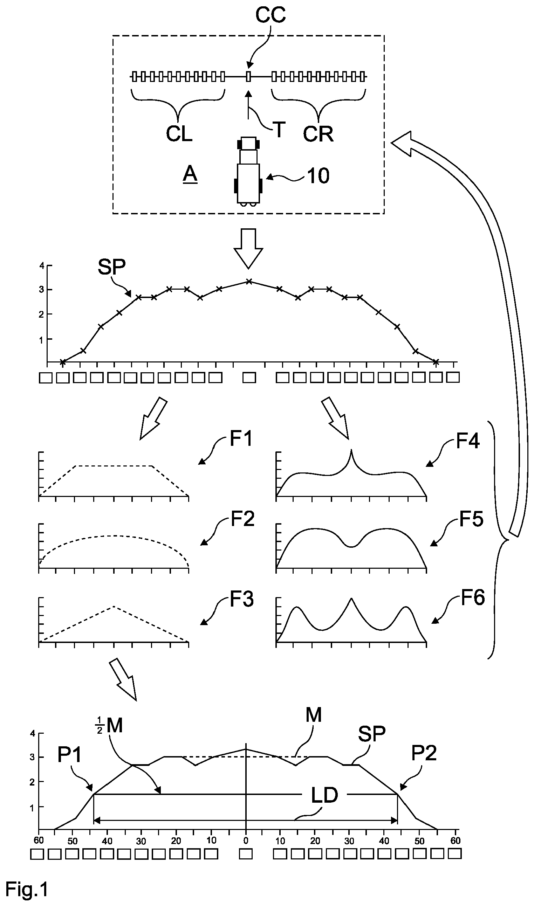

Die Fig. 1 zeigt ein aus dem Stand der Technik bekanntes Verfahren zum Ermitteln eines Fahrspurabstandes LD für die fahrgassenunabhängige Ausbringung von Streugut.

Zunächst werden im Rahmen eines Streuversuchs auf einer landwirtschaftlichen Nutzfläche A Auffangbehälter CL, CC, CR positioniert, sodass das Streugut während des Überfahrens der Auffangbehälter CL, CC, CR durch die Auffangbehälter CL, CC, CR aufgefangen wird. Während des Überfahrens der Auffangbehälter CL, CC, CR bewegt sich die Streumaschine 10 in Fahrtrichtung T.

Anschließend werden die von den Auffangbehältern CL, CC, CR aufgefangenen Mengen an Streugut in ein Datenblatt eingetragen, sodass über die Behälterauffangmengen zeichnerisch ein grobes Streubild SP ermittelt werden kann.

Die Form des zeichnerisch ermittelten Streubilds SP wird nachfolgend mit Streubildformen F1-F6 verglichen. Wenn das zeichnerisch ermittelte Streubild SP eine Trapezform F1, ein Halboval F2 oder eine Dreiecksform F3 aufweist, werden die für den Streuversuch verwendeten Einstellparameter ohne weitere Optimierung als geeignet bewertet, sodass diese Einstellparameter für die weitere Streugutausbringung beibehalten werden.

Bei ungeeigneten Streubildformen F4-F6 muss der Bediener, je nach vorliegender Streubildform, einen oder mehrere Einstellparameter anpassen und den Streuversuch wiederholen. Dieser Vorgang muss so lange wiederholt werden, bis zeichnerisch eine akzeptable Streubildform F1-F3 ermittelt wird.

Ausgehend von dem zeichnerisch ermittelten Streubild SP wird dann ein streubildspezifischer Fahrspurabstand LD abgeleitet. Hierzu wird die durchschnittliche Materialmenge M in einem Mittelbereich des Streubildes SP zeichnerisch eingetragen. Nachfolgend wird die Hälfte der Materialmenge M ermittelt und die Schnittpunkte P1, P2 mit dem Streubildverlauf gekennzeichnet. Der Abstand zwischen den Punkten P1, P2 entspricht dem von dem Bediener der Maschine einzuhaltenden Fahrspurabstand LD.

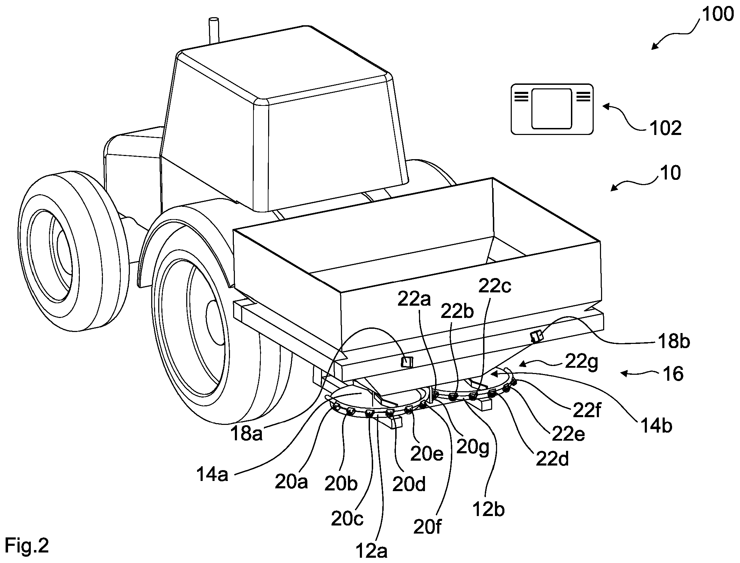

Die Fig. 2 zeigt ein System 100 zum Ermitteln einer maschinen- und streugutspezifischen sowie fahrgassenunabhängigen Maximalarbeitsbreite WWₘₐₓ, WW_{max,VS}. Hierbei bezeichnet WW_{max,VS} eine varianzstabile Maximalarbeitsbreite. Das System 100 umfasst ein sensorisches Streuguterfassungssystem 16 einer Streumaschine 10. Das Streuguterfassungssystem 16 ist dazu eingerichtet, dass von den Streuscheiben 12a, 12b der Streumaschine 10 abgeworfene Streugut zu erfassen.

Das System 100 umfasst ferner eine elektronische Datenverarbeitungseinrichtung 102, welche dazu eingerichtet ist, die maschinen- und streugutspezifische sowie fahrgassenunabhängige Maximalarbeitsbreite WWₘₐₓ, WW_{max,VS} zu berechnen und beim Berechnen der maschinen- und streugutspezifischen sowie fahrgassenunabhängigen Maximalarbeitsbreite WWₘₐₓ, WW_{max,VS} von dem Streuguterfassungssystem 16 ermittelte Messwerte und/oder einen oder mehrere daraus abgeleitete Ausbringparameter zu berücksichtigen. Die elektronische Datenverarbeitungseinrichtung 102 kann beispielsweise der Bordcomputer der Streumaschine 10 sein.

Das Streuguterfassungssystem 16 umfasst Erfassungssensoren 18a, 18b. Der Erfassungssensor 18a ist der Streuscheibe 12a zugeordnet und dazu eingerichtet, die Fluggeschwindigkeit des von der Streuscheibe 12a abgeworfenen Streuguts zu erfassen. Der Erfassungssensor 18b ist der Streuscheibe 12b zugeordnet und dazu eingerichtet, die Fluggeschwindigkeit des von der Streuscheibe 12b angeworfenen Streuguts zu erfassen. Die Erfassungssensoren 18a, 18b können beispielsweise als Radarsensoren ausgebildet sein.

Das Streuguterfassungssystem 16 umfasst ferner Erfassungssensoren 20a-20g, 22a-22h. Die Erfassungssensoren 20a-20g sind der Streuscheibe 12a zugeordnet und dazu eingerichtet, die Wurfrichtung des von der Streuscheibe 12a angeworfenen Streuguts zu erfassen. Die Erfassungssensoren 22a-22g sind der Streuscheibe 12b zugeordnet und dazu eingerichtet, die Wurfrichtung des von der Streuscheibe 12b abgeworfenen Streuguts zu erfassen. Die Erfassungssensoren 20a-20g und 22a-22h können beispielsweise als Radarsensoren ausgebildet sein.

Die elektronische Datenverarbeitungseinrichtung 102 ermittelt auf Grundlage der sensorisch erfassten Fluggeschwindigkeiten des Streuguts und/oder der ermittelten Wurfrichtungen des abgeworfenen Streuguts eine theoretische Maximalwurfweite und/oder eine theoretische Maximalarbeitsbreite WWₘₐₓ. Beim Berechnen der maschinen- und streugutspezifischen sowie fahrgassenunabhängigen Maximalarbeitsbreite reduziert die elektronische Datenverarbeitungseinrichtung 102 die theoretische Maximalarbeitsbreite WWₘₐₓ zur Berücksichtigung von zu erwartenden Fremdeinflüssen auf die Streugutverteilung auf eine varianzstabile Arbeitsbreite WW_{max,VS}.

Die elektronische Datenverarbeitungseinrichtung 102 veranlasst dann die Einstellung von Betriebsparametern an der Streumaschine 10, sodass sich die varianzstabile Arbeitsbreite WW_{max,VS} einstellt. Dabei wird eine geeignete Scheibendrehzahl an den Streuscheiben 12a, 12b und ein geeigneter Aufgabepunkt des Streuguts auf die Streuscheiben 12a, 12b eingestellt. Der Aufgabepunkt des Streuguts auf die Streuscheiben 12a, 12b wird über Streugutaufgabeverstelleinrichtungen 14a, 14b der Streumaschine 10 eingestellt.

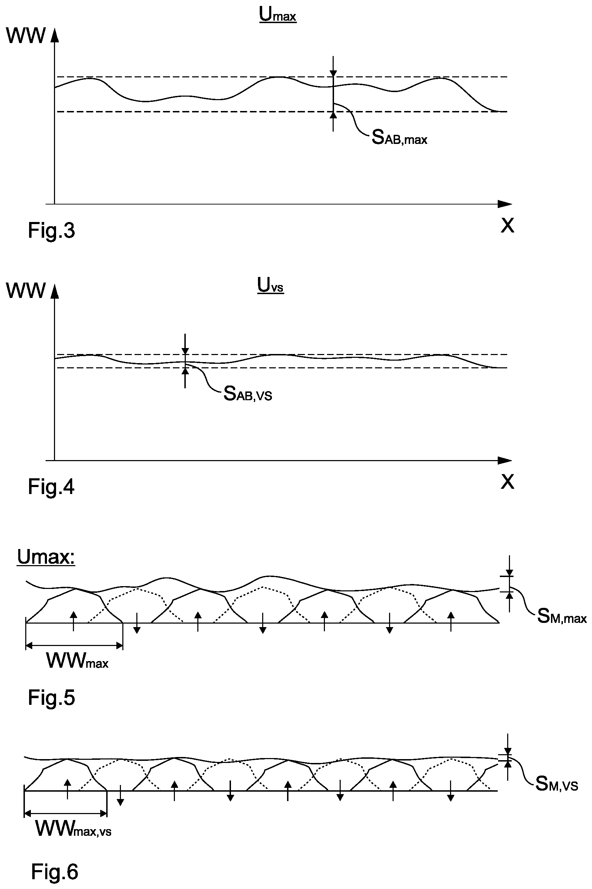

Die Fig. 3 zeigt, dass sich bei maximaler Scheibendrehzahl Uₘₐₓ ausgeprägte Arbeitsbreitenschwankungen S_{AB,max} während der Streugutausbringung ergeben können, da es vorkommen kann, dass externe Einflüsse nicht mehr oder nur noch unzureichend durch die Regelung ausgeglichen werden können. Die elektronische Datenverarbeitungseinrichtung 102 berücksichtigt beim Berechnen der maschinen- und streugutspezifischen sowie fahrgassenunabhängigen Maximalarbeitsbreite WW_{max,VS} die Einhaltung von die Querverteilung des Streuguts betreffenden Mindestanforderungen. Die maschinen- und streugutspezifische sowie fahrgassenunabhängige Maximalarbeitsbreite WW_{max,VS} wird von der Datenverarbeitungseinrichtung 102 so berechnet, dass die Arbeitsbreitenschwankung S_{AB,VS} in einem Toleranzbereich liegen. Die Fig. 4 zeigt, dass die ermittelte maschinen- und streugutspezifische sowie fahrgassenunabhängige Maximalarbeitsbreite WW_{max,VS} bei einer geringeren varianzstabilen Scheibendrehzahl U_{VS} unterhalb der theoretischen Maximalarbeitsbreite WWₘₐₓ liegt. Es wird aber eine gewisse Varianzstabilität eingehalten, sodass die Arbeitsbreitenschwankungen S_{AB,VS} in einem Toleranzbereich liegen.

Die Fig. 5 und 6 zeigen, dass die Mengenschwankungen bei der Querverteilung des Streuguts beim Ausführen von Parallelfahrten beim Einstellen der varianzstabilen Arbeitsbreite WW_{max,VS} wesentlich geringer sind als die Mengenschwankungen beim Ausführen der Parallelfahrten mit maximaler Arbeitsbreite WWₘₐₓ. Die Mengenschwankungen S_{M,VS} beim Ausführen von Parallelfahrten mit der varianzstabilen Arbeitsbreite WW_{max,VS} liegen im Gegensatz zu den Schwankungen S_{M,max} beim Ausführen der Parallelfahrten mit Maximalarbeitsbreite WWₘₐₓ innerhalb eines Toleranzbereichs. In Figuren 5 und 6 ist ebenfalls erkennbar, dass eine gewisse Überlappung des bei aufeinanderfolgenden Fahrten, insbesondere in entgegengesetzter Richtung, ausgebrachten Streuguts erforderlich ist, um eine homogene Querverteilung des Streuguts zu erreichen. Es ist weiterhin zu erkennen, dass der Spurabstand LD kleiner ist als die maximale Arbeitsbreite WWₘₐₓ bzw. die varianzstabile Arbeitsbreite WW_{max,VS}.

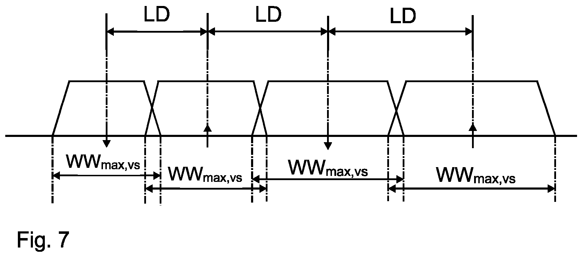

In Figur 7 ist gezeigt, wie eine sich, beispielsweise aufgrund von Umwelteinflüssen, verändernde varianzstabile Arbeitsbreite WW_{max,VS} auf einen Spurabstand LD auswirkt. Es ist zu erkennen, dass, um Mengenschwankungen bei der Querverteilung des Streuguts zu reduzieren, eine Anpassung der varianzstabilen Arbeitsbreite WW_{max,VS} mit einer entsprechenden Anpassung des Spurabstands LD einhergeht. Sowohl die varianzstabile Arbeitsbreite WW_{max,VS} als auch der Spurabstand LD sind symmetrisch zu der Position der landwirtschaftlichen Streumaschine. Somit kann aufgrund der für eine gleichmäßige Ausbringung des Streuguts notwendigen Überlappung der Spurabstand LD basierend auf der varianzstabilen Arbeitsbreite WW_{max,VS} bestimmt werden.

Der neue Spurabstand LD und/oder die neu bestimmte varianzstabile Arbeitsbreite WW_{max,VS} können dem Fahrer, beispielsweise vor dem Spurwechsel, mitgeteilt werden. Es ist auch möglich, dass dem Fahrer basierend auf dem neuen Spurabstand Anweisungen gegeben werden, wie die nächste Spur zu befahren ist. Weiterhin ist es möglich, dass die landwirtschaftliche Streumaschine die nächste Spur basierend auf dem neuen Spurabstand autonom an- und befährt.

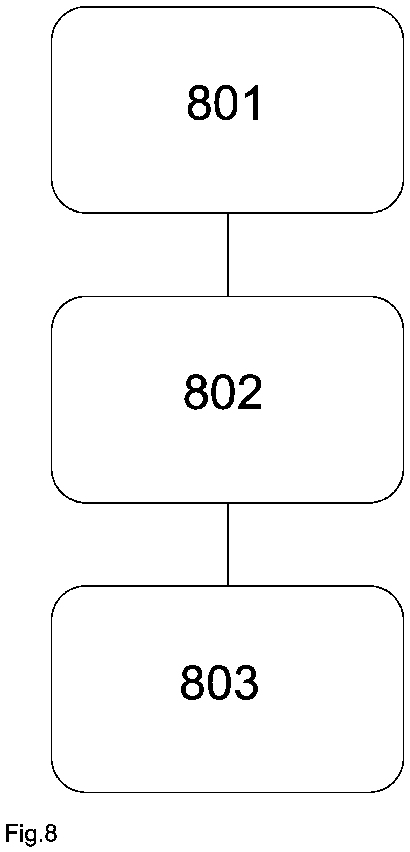

Figur 8 zeigt eine schematische Darstellung eines Verfahrens zum Ermitteln einer maschinen- und streugutspezifischen sowie fahrgassenunabhängigen Maximalarbeitsbreite. In Schritt 801 erfolgt ein Abwerfen von Streugut mittels zumindest einer Streuscheibe einer landwirtschaftlichen Streumaschine. In Schritt 802 erfolgt ein Erfassen des abgeworfenen Streuguts mittels eines sensorischen Streuguterfassungssystems der landwirtschaftlichen Streumaschine. In Schritt 803 erfolgt ein Berechnen der maschinen- und streugutspezifischen sowie fahrgassenunabhängigen Maximalarbeitsbreite mittels einer elektronischen Datenverarbeitungseinrichtung, wobei die elektronische Datenverarbeitungseinrichtung beim Berechnen der maschinen- und streugutspezifischen sowie fahrgassenunabhängigen Maximalarbeitsbreite von dem Streuguterfassungssystem ermittelte Messwerte und/oder einen oder mehrere daraus abgeleitete Ausbringparameter berücksichtigt.

Bei der landwirtschaftlichen Streumaschine kann es sich beispielsweise um die in Figur 2 gezeigte Streumaschine 10 handeln.

### Bezugszeichen

- 10: Streumaschine
- 12a, 12b: Streuscheiben
- 14a, 14b: Streugutaufgabeverstelleinrichtung
- 16: Streuguterfassungssystem
- 18a, 18b: Erfassungssensoren
- 20a-20g: Erfassungssensoren
- 22a-22g: Erfassungssensoren

- 100: System
- 102: Datenverarbeitungseinrichtung

- WW: Arbeitsbreite
- WWₘₐₓ: Maximalarbeitsbreite
- WW_{max,VS}: varianzstabile Maximalarbeitsbreite
- CL: Auffangbehälter
- CR: Auffangbehälter
- CC: Auffangbehälter
- T: Fahrtrichtung
- F1-F6: Streubildformen
- LD: Fahrspurabstand
- M: Materialmenge
- A: Nutzfläche
- SP: Streubild
- S_{AB,max}: Arbeitsbreitenschwankung bei Maximaldrehzahl
- S_{AB,VS}: Arbeitsbreitenschwankung bei varianzstabiler Drehzahl
- S_{M,max}: Mengenschwankungen bei Maximaldrehzahl
- S_{M,VS}: Mengenschwankungen bei varianzstabiler Drehzahl
- P1, P2: Punkte
- U: Scheibendrehzahl
- U_{VS}: varianzstabile Scheibendrehzahl
- Uₘₐₓ: Maximaldrehzahl

## Patentansprüche

1. Verfahren zum Ermitteln einer maschinen- und streugutspezifischen sowie fahrgassenunabhängigen Maximalarbeitsbreite für einen Streuvorgang, mit den Schritten:
- Abwerfen von Streugut mittels zumindest einer Streuscheibe einer landwirtschaftlichen Streumaschine; und
- Erfassen des abgeworfenen Streuguts mittels eines sensorischen Streuguterfassungssystems der landwirtschaftlichen Streumaschine; und
- Berechnen der maschinen- und streugutspezifischen sowie fahrgassenunabhängigen Maximalarbeitsbreite mittels einer elektronischen Datenverarbeitungseinrichtung, wobei die elektronische Datenverarbeitungseinrichtung beim Berechnen der maschinen- und streugutspezifischen sowie fahrgassenunabhängigen Maximalarbeitsbreite von dem Streuguterfassungssystem ermittelte Messwerte und/oder einen oder mehrere daraus abgeleitete Ausbringparameter berücksichtigt,
wobei die von dem Streuguterfassungssystem ermittelten Messwerte und/oder der eine oder die mehreren daraus abgeleiteten Ausbringparameter die Wurfrichtung des abgeworfenen Streuguts und/oder die Fluggeschwindigkeit des abgeworfenen Streuguts betreffen,
**dadurch gekennzeichnet, dass**
die elektronische Datenverarbeitungseinrichtung auf Grundlage der ermittelten Fluggeschwindigkeit des abgeworfenen Streuguts und/oder der ermittelten Wurfrichtung des abgeworfenen Streuguts eine theoretische Maximalwurfweite und/oder eine theoretische Maximalarbeitsbreite berechnet, wobei die elektronische Datenverarbeitungseinrichtung beim Berechnen der maschinen- und streugutspezifischen sowie fahrgassenunabhängigen Maximalarbeitsbreite die theoretische Maximalwurfweite und/oder die theoretische Maximalarbeitsbreite zur Berücksichtigung von zu erwartenden Fremdeinflüssen auf die Streugutverteilung auf eine varianzstabile Maximalwurfweite und/oder eine varianzstabile Maximalarbeitsbreite reduziert, und
dass die elektronische Datenverarbeitungseinrichtung dazu konfiguriert ist, Einstellparameter für die Streumaschine, über welche die varianzstabile Maximalwurfweite und/oder varianzstabile Maximalarbeitsbreite während der Streugutausbringung umgesetzt wird, zu berechnen.

2. Verfahren nach Anspruch 1,
wobei die von dem Streuguterfassungssystem ermittelten Messwerte und/oder der eine oder die mehreren daraus abgeleiteten Ausbringparameter die Verteilung des abgeworfenen Streuguts betreffen.

3. Verfahren nach Anspruch 1 oder 2,
wobei die von dem Streuguterfassungssystem ermittelten Messwerte und/oder der eine oder die mehreren daraus abgeleiteten Ausbringparameter die Wurfweite des abgeworfenen Streuguts betreffen.

4. Verfahren nach einem der vorstehenden Ansprüche,
wobei die elektronische Datenverarbeitungseinrichtung beim Berechnen der maschinen- und streugutspezifischen sowie fahrgassenunabhängigen Maximalarbeitsbreite die Einhaltung von einem oder mehreren die Querverteilung des Streuguts betreffenden Mindestanforderungen berücksichtigt.

5. Verfahren nach einem der vorstehenden Ansprüche,
wobei das Abwerfen von Streugut und/oder das Erfassen des abgeworfenen Streuguts mittels des Streuguterfassungssystems bei einer oder mehreren Kalibrierdrehzahlen an der zumindest einen Streuscheibe und/oder beim Durchlaufen eines Kalibrierdrehzahlfensters an der zumindest einen Streuscheibe erfolgt.

6. Verfahren nach einem der vorstehenden Ansprüche, weiterhin umfassend:
- sensorisches Ermitteln der Menge und/oder des Gewichts des sich auf der zumindest einen Streuscheibe befindenden Streuguts;
wobei die elektronische Datenverarbeitungseinrichtung beim Berechnen der maschinen- und streugutspezifischen sowie fahrgassenunabhängigen Maximalarbeitsbreite die sensorisch ermittelte Menge und/oder das sensorisch ermittelte Gewicht des sich auf der zumindest einen Streuscheibe befindenden Streuguts berücksichtigt.

7. Verfahren nach einem der vorstehenden Ansprüche,
weiterhin umfassend:
- Ermitteln der aktuellen Konfiguration und/oder eines aktuellen oder mehrerer aktueller Betriebsparameter der Streumaschine;
wobei die elektronische Datenverarbeitungseinrichtung beim Berechnen der maschinen- und streugutspezifischen sowie fahrgassenunabhängigen Maximalarbeitsbreite die ermittelte aktuelle Konfiguration oder den einen oder die mehreren ermittelten aktuellen Betriebsparameter der Streumaschine berücksichtigt.

8. Verfahren nach einem der vorstehenden Ansprüche,
wobei die elektronische Datenverarbeitungseinrichtung beim Berechnen der maschinen- und streugutspezifischen sowie fahrgassenunabhängigen Maximalarbeitsbreite ein fiktives Ausbringszenario zugrunde legt, bei welchem das Streubild statistischen Schwankungen unterliegt.

9. Verfahren nach einem der vorstehenden Ansprüche,
wobei die elektronische Datenverarbeitungseinrichtung beim Berechnen der maschinen- und streugutspezifischen sowie fahrgassenunabhängigen Maximalarbeitsbreite ein fiktives Ausbringszenario zugrunde legt, bei welchem das Streubild aufgrund von einem oder mehreren angenommenen Fremdeinflüssen, insbesondere einem angenommenen Windeinfluss, Schwankungen unterliegt.

10. Verfahren nach einem der vorstehenden Ansprüche,
wobei die elektronische Datenverarbeitungseinrichtung beim Berechnen der maschinen- und streugutspezifischen sowie fahrgassenunabhängigen Maximalarbeitsbreite einen, insbesondere vom Bediener, eingestellten Streubildtoleranzmodus und/oder eine, insbesondere vom Bediener, eingestellte tolerierte Streubildschwankung berücksichtigt.

11. Verfahren nach einem der vorstehenden Ansprüche,
wobei eine Steuerungseinrichtung eine selbsttätige Einstellung von Einstellparametern zur Erzielung der berechneten maschinen- und streugutspezifischen sowie fahrgassenunabhängigen Maximalarbeitsbreite an der Streumaschine veranlasst.

12. System zum Ermitteln einer maschinen- und streugutspezifischen sowie fahrgassenunabhängigen Maximalarbeitsbreite für einen Streuvorgang umfassend:
- ein sensorisches Streuguterfassungssystem einer Streumaschine, wobei das Streuguterfassungssystem dazu eingerichtet ist, von zumindest einer Streuscheibe der Streumaschine abgeworfenes Streugut zu erfassen; und
eine elektronische Datenverarbeitungseinrichtung, welche dazu eingerichtet ist, die maschinen- und streugutspezifische sowie fahrgassenunabhängige Maximalarbeitsbreite zu berechnen und beim Berechnen der maschinen- und streugutspezifischen sowie fahrgassenunabhängigen Maximalarbeitsbreite von dem Streuguterfassungssystem ermittelte Messwerte und/oder einen oder mehrere daraus abgeleitete Ausbringparameter zu berücksichtigen,
wobei die von dem Streuguterfassungssystem ermittelten Messwerte und/oder der eine oder die mehreren daraus abgeleiteten Ausbringparameter die Wurfrichtung des abgeworfenen Streuguts und/oder die Fluggeschwindigkeit des abgeworfenen Streuguts betreffen,
**dadurch gekennzeichnet, dass**
die elektronische Datenverarbeitungseinrichtung auf Grundlage der ermittelten Fluggeschwindigkeit des abgeworfenen Streuguts und/oder der ermittelten Wurfrichtung des abgeworfenen Streuguts eine theoretische Maximalwurfweite und/oder eine theoretische Maximalarbeitsbreite berechnet, wobei die elektronische Datenverarbeitungseinrichtung beim Berechnen der maschinen- und streugutspezifischen sowie fahrgassenunabhängigen Maximalarbeitsbreite die theoretische Maximalwurfweite und/oder die theoretische Maximalarbeitsbreite zur Berücksichtigung von zu erwartenden Fremdeinflüssen auf die Streugutverteilung auf eine varianzstabile Maximalwurfweite und/oder eine varianzstabile Maximalarbeitsbreite reduziert, und
dass die elektronische Datenverarbeitungseinrichtung dazu konfiguriert ist, Einstellparameter für die Streumaschine, über welche die varianzstabile Maximalwurfweite und/oder varianzstabile Maximalarbeitsbreite während der Streugutausbringung umgesetzt wird, zu berechnen.

## Claims

1. Method for ascertaining a machine- and spreading material-specific and tramline-independent maximum working width for a spreading operation, comprising the steps of:
- ejecting spreading material by means of at least one spreading disk of an agricultural spreading machine; and
- detecting the ejected spreading material by means of a sensor-based spreading material detection system of the agricultural spreading machine; and
- calculating the machine- and spreading material-specific and tramline-independent maximum working width by means of an electronic data processing device, wherein the electronic data processing device takes into account, when calculating the machine- and spreading material-specific and tramline-independent maximum working width, measured values ascertained by the spreading material detection system and/or one or more application parameters derived from said measured values,
wherein the measured values ascertained by the spreading material detection system and/or the one or more application parameters derived from said measured values relate to the ejection direction of the ejected spreading material and/or the flight speed of the ejected spreading material,
**characterized in that**
the electronic data processing device calculates, on the basis of the ascertained flight speed of the ejected spreading material and/or the ascertained ejection direction of the ejected spreading material, a theoretical maximum ejection distance and/or a theoretical maximum working width, wherein the electronic data processing device reduces, when calculating the machine- and spreading material-specific and tramline-independent maximum working width, the theoretical maximum ejection distance and/or the theoretical maximum working width to a variance-stable maximum ejection distance and/or a variance-stable maximum working width in order to take into account external influences to be expected that influence the spreading material distribution, and
**in that** the electronic data processing device is configured to calculate setting parameters for the spreading machine, via which the variance-stable maximum ejection distance and/or variance-stable maximum working width is implemented during the spreading material application.

2. Method according to claim 1,
wherein the measured values ascertained by the spreading material detection system and/or the one or more application parameters derived from said measured values relate to the distribution of the ejected spreading material.

3. Method according to claim 1 or 2,
wherein the measured values ascertained by the spreading material detection system and/or the one or more application parameters derived from said measured values relate to the ejection distance of the ejected spreading material.

4. Method according to any of the preceding claims,
wherein the electronic data processing device takes into account, when calculating the machine- and spreading material-specific and tramline-independent maximum working width, compliance with one or more minimum requirements relating to the lateral distribution of the spreading material.

5. Method according to any of the preceding claims,
wherein spreading material is ejected and/or the ejected spreading material is detected by means of the spreading material detection system at one or more calibration speeds at the at least one spreading disk and/or when passing through a calibration speed window at the at least one spreading disk.

6. Method according to any of the preceding claims, further comprising:
- ascertaining, by means of sensors, the quantity and/or the weight of the spreading material located on at least one spreading disk;
wherein the electronic data processing device takes into account, when calculating the machine- and spreading material-specific and tramline-independent maximum working width, the sensor-ascertained quantity and/or the sensor-ascertained weight of the spreading material located on the at least one spreading disk.

7. Method according to any of the preceding claims,
further comprising:
- ascertaining the current configuration and/or one or more current operating parameters of the spreading machine;
wherein the electronic data processing device takes into account, when calculating the machine- and spreading material-specific and tramline-independent maximum working width, the ascertained current configuration or the one or more ascertained current operating parameters of the spreading machine.

8. Method according to any of the preceding claims,
wherein the electronic data processing device calculates the machine- and spreading material-specific and tramline-independent maximum working width using a fictitious application scenario in which the spreading pattern is subject to statistical fluctuations.

9. Method according to any of the preceding claims,
wherein the electronic data processing device calculates the machine- and spreading material-specific and tramline-independent maximum working width using a fictitious application scenario in which the spreading pattern is subject fluctuations because of one or more assumed external influences, in particular an assumed wind influence.

10. Method according to any of the preceding claims,
wherein the electronic data processing device takes into account, when calculating the machine- and spreading material-specific and tramline-independent maximum working width, a set spreading pattern tolerance mode, in particular set by the operator, and/or a set tolerated spreading pattern fluctuation, in particular set by the operator.

11. Method according to any of the preceding claims,
wherein a control device causes setting parameters to be automatically set at the spreading machine in order to achieve the calculated machine- and spreading material-specific and tramline-independent maximum working width.

12. System for ascertaining a machine- and spreading material-specific and tramline-independent maximum working width for a spreading operation, comprising:
- a sensor-based spreading material detection system of a spreading machine, wherein the spreading material detection system is configured to detect spreading material ejected by at least one spreading disk of the spreading machine; and
an electronic data processing device which is configured to calculate the machine- and spreading material-specific and tramline-independent maximum working width and to take into account, when calculating the machine- and spreading material-specific and tramline-independent maximum working width, measured values ascertained by the spreading material detection system and/or one or more application parameters derived from said measured values,
wherein the measured values ascertained by the spreading material detection system and/or the one or more application parameters derived from said measured values relate to the ejection direction of the ejected spreading material and/or the flight speed of the ejected spreading material,
**characterized in that**
the electronic data processing device calculates, on the basis of the ascertained flight speed of the ejected spreading material and/or the ascertained ejection direction of the ejected spreading material, a theoretical maximum ejection distance and/or a theoretical maximum working width, wherein the electronic data processing device reduces, when calculating the machine- and spreading material-specific and tramline-independent maximum working width, the theoretical maximum ejection distance and/or the theoretical maximum working width to a variance-stable maximum ejection distance and/or a variance-stable maximum working width in order to take into account external influences to be expected that influence the spreading material distribution, and
**in that** the electronic data processing device is configured to calculate setting parameters for the spreading machine, via which the variance-stable maximum ejection distance and/or variance-stable maximum working width is implemented during the spreading material application.

## Revendications

1. Procédé permettant de déterminer une largeur de travail maximale spécifique à la machine et au produit à épandre et indépendante des voies jalonnées, pour un processus d'épandage, comportant les étapes suivantes :
- éjection de produit à épandre par le biais d'au moins un disque d'épandage d'une épandeuse agricole ; et
- détection du produit à épandre éjecté par le biais d'un système de détection de produit à épandre par des capteurs de l'épandeuse agricole ; et
- calcul de la largeur de travail maximale, spécifique à la machine et au produit à épandre et indépendante des voies jalonnées, par le biais d'un dispositif de traitement de données électronique, dans lequel le dispositif de traitement de données électronique tient compte, lors du calcul de la largeur de travail maximale spécifique à la machine et au produit à épandre et indépendante des voies jalonnées, de valeurs mesurées déterminées par le système de détection de produit à épandre et/ou d'un ou plusieurs paramètres d'application qui en découlent,
dans lequel les valeurs mesurées déterminées par le système de détection de produit à épandre et/ou les un ou plusieurs paramètres d'application qui en découlent concernent la direction de projection du produit à épandre éjecté et/ou la vitesse de vol du produit à épandre éjecté,
**caractérisé en ce que**
le dispositif de traitement de données électronique calcule, sur la base de la vitesse de vol déterminée du produit à épandre éjecté et/ou de la direction de projection déterminée du produit à épandre éjecté, une portée de projection maximale théorique et/ou une largeur de travail maximale théorique, dans lequel le dispositif de traitement de données électronique, lors du calcul de la largeur de travail maximale spécifique à la machine et au produit à épandre et indépendante des voies jalonnées, réduit la portée de projection maximale théorique et/ou la largeur de travail maximale théorique à une portée de projection maximale à variance stable et/ou une largeur de travail maximale à variance stable, afin de tenir compte des influences extérieures prévisibles sur la répartition du produit à épandre, et
que le dispositif de traitement de données électronique est configuré pour calculer des paramètres de réglage de l'épandeuse, par l'intermédiaire desquels la portée de projection maximale à variance stable et/ou la largeur de travail maximale à variance stable sont réalisées pendant l'application de produit à épandre.

2. Procédé selon la revendication 1,
dans lequel les valeurs mesurées déterminées par le système de détection de produit à épandre et/ou les un ou plusieurs paramètres d'application qui en découlent concernent la répartition du produit à épandre éjecté.

3. Procédé selon la revendication 1 ou 2,
dans lequel les valeurs mesurées déterminées par le système de détection de produit à épandre et/ou les un ou plusieurs paramètres d'épandage qui en découlent concernent la portée de projection du produit à épandre éjecté.

4. Procédé selon l'une des revendications précédentes,
dans lequel le dispositif de traitement de données électronique tient compte, lors du calcul de la largeur de travail maximale spécifique à la machine et au produit à épandre et indépendante des voies jalonnées, du respect d'une ou plusieurs exigences minimales concernant la répartition transversale du produit à épandre.

5. Procédé selon l'une des revendications précédentes,
dans lequel l'éjection du produit à épandre et/ou la détection du produit à épandre éjecté par le biais du système de détection de produit à épandre s'effectuent à un ou plusieurs régimes d'étalonnage au niveau de l'au moins un disque d'épandage et/ou lors du passage dans une plage de régimes d'étalonnage au niveau de l'au moins un disque d'épandage.

6. Procédé selon l'une des revendications précédentes, comprenant en outre :
- la détermination par des capteurs de la quantité et/ou du poids du produit à épandre se trouvant sur l'au moins un disque d'épandage ;
dans lequel le dispositif de traitement de données électronique tient compte, lors du calcul de la largeur de travail maximale spécifique à la machine et au produit à épandre et indépendante des voies jalonnées, de la quantité déterminée par des capteurs et/ou du poids déterminé par des capteurs du produit à épandre se trouvant sur l'au moins un disque d'épandage.

7. Procédé selon l'une des revendications précédentes, comprenant en outre :
- la détermination de la configuration actuelle et/ou d'un ou plusieurs paramètres de fonctionnement actuels de l'épandeuse ;
dans lequel le dispositif de traitement de données électronique tient compte, lors du calcul de la largeur de travail maximale spécifique à la machine et au produit à épandre et indépendante des voies jalonnées, de la configuration actuelle déterminée ou des un ou plusieurs paramètres de fonctionnement actuels déterminés de l'épandeuse.

8. Procédé selon l'une des revendications précédentes,
dans lequel le dispositif de traitement de données électronique se base, pour le calcul de la largeur de travail maximale spécifique à la machine et au produit à épandre et indépendante des voies jalonnées, sur un scénario d'application fictif dans lequel la courbe d'épandage est soumise à des variations statistiques.

9. Procédé selon l'une des revendications précédentes,
dans lequel le dispositif de traitement de données électronique se base, lors du calcul de la largeur de travail maximale spécifique à la machine et au produit à épandre et indépendante des voies jalonnées, sur un scénario d'application fictif dans lequel la courbe d'épandage est soumise à des variations en raison d'une ou plusieurs influences extérieures supposées, notamment une influence du vent supposée.

10. Procédé selon l'une des revendications précédentes,
dans lequel le dispositif de traitement de données électronique tient compte, lors du calcul de la largeur de travail maximale spécifique à la machine et au produit à épandre et indépendante des voies jalonnées, d'un mode de tolérance de courbe d'épandage réglé, notamment par l'opérateur, et/ou d'une variation de courbe d'épandage tolérée réglée, notamment par l'opérateur.

11. Procédé selon l'une des revendications précédentes,
dans lequel un dispositif de commande amène un réglage automatique de paramètres de réglage afin d'obtenir, sur l'épandeuse, la largeur de travail maximale spécifique à la machine et au produit à épandre et indépendante des voies jalonnées calculée.

12. Système permettant de déterminer une largeur de travail maximale spécifique à la machine et au produit à épandre et indépendante des voies jalonnées, pour un processus d'épandage, comprenant :
- un système de détection de produit à épandre par des capteurs d'une épandeuse, dans lequel le système de détection de produit à épandre est conçu pour détecter le produit à épandre éjecté par au moins un disque d'épandage de l'épandeuse ; et
un dispositif de traitement de données électronique, qui est conçu pour calculer la largeur de travail maximale spécifique à la machine et au produit à épandre et indépendante des voies jalonnées, et pour prendre en compte, lors du calcul de la largeur de travail maximale spécifique à la machine et au produit à épandre et indépendante des voies jalonnées, des valeurs mesurées déterminées par le système de détection de produit à épandre et/ou un ou plusieurs paramètres d'application qui en découlent,
dans lequel les valeurs mesurées déterminées par le système de détection de produit à épandre et/ou les un ou plusieurs paramètres d'application qui en découlent concernent la direction de projection du produit à épandre éjecté et/ou la vitesse de vol du produit à épandre éjecté,
**caractérisé en ce que**
le dispositif de traitement de données électronique calcule, sur la base de la vitesse de vol déterminée du produit à épandre éjecté et/ou de la direction de projection déterminée du produit à épandre éjecté, une portée de projection maximale théorique et/ou une largeur de travail maximale théorique, dans lequel le dispositif de traitement de données électronique, lors du calcul de la largeur de travail maximale spécifique à la machine et au produit à épandre et indépendante des voies jalonnées, réduit la portée de projection maximale théorique et/ou la largeur de travail maximale théorique à une portée de projection maximale à variance stable et/ou une largeur de travail maximale à variance stable, afin de tenir compte des influences extérieures prévisibles sur la répartition du produit à épandre, et
que le dispositif de traitement de données électronique est configuré pour calculer des paramètres de réglage de l'épandeuse, par l'intermédiaire desquels la portée de projection maximale à variance stable et/ou la largeur de travail maximale à variance stable sont réalisées pendant l'application de produit à épandre.
